# EUROPÄISCHE PATENTSCHRIFT

(11) **EP 2 619 875 B1**
(45) Veröffentlichungstag und Bekanntmachung des Hinweises auf die Patenterteilung: **11.07.2018**
(21) Anmeldenummer: 11761301.8
(22) Anmeldetag: 25.08.2011
(51) Int. Cl.: H02J 7/00, B60L 11/18, H02J 7/14

(54) **SYSTEM ZUM LADEN EINES ENERGIESPEICHERS UND VERFAHREN ZUM BETRIEB DES LADESYSTEMS**
SYSTEM FOR CHARGING AN ENERGY STORE, AND METHOD FOR OPERATING THE CHARGING SYSTEM
SYSTÈME POUR CHARGER UN ACCUMULATEUR D'ÉNERGIE ET PROCÉDÉ DE FONCTIONNEMENT D'UN SYSTÈME DE CHARGEMENT

(30) Priorität: 20.09.2010 DE 102010041074
(43) Veröffentlichungstag der Anmeldung: 31.07.2013
(73) Patentinhaber: Robert Bosch GmbH, 70442 Stuttgart (DE)
(72) Erfinder: FEUERSTACK, Peter, 71642 Ludwigsburg (DE); WEISSENBORN, Erik, 70374 Stuttgart (DE); KESSLER, Martin, 73527 Schwaebisch Gmuend (DE)
(86) Internationale Anmeldenummer: PCT/EP2011/064610
(87) Internationale Veröffentlichungsnummer: WO 2012/038183

(56) Entgegenhaltungen:
- WO-A1-2008/086760
- DE-A1- 4 107 391
- DE-A1-102007 009 217
- US-A1- 2009 146 612
- US-A1- 2010 007 293

## Beschreibung

Die Erfindung betrifft ein System zum Laden eines Energiespeichers und ein Verfahren zum Betrieb des Ladesystems.

### Stand der Technik

Es zeichnet sich ab, dass in Zukunft sowohl bei stationären Anwendungen, wie z.B. Windkraftanlagen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren. In herkömmlichen Anwendungen wird eine elektrische Maschine, welche z.B. als Drehfeldmaschine ausgeführt ist, über einen Umrichter in Form eines Wechselrichters gesteuert. Kennzeichnend für derartige Systeme ist ein sogenannter Gleichspannungszwischenkreis, über welchen ein Energiespeicher, in der Regel eine Batterie, an die Gleichspannungsseite des Wechselrichters angeschlossen ist. Um die für eine jeweilige Anwendung gegebenen Anforderungen an Leistung und Energie erfüllen zu können, werden mehrere Batteriezellen in Serie geschaltet. Da der von einem derartigen Energiespeicher bereitgestellte Strom durch alle Batteriezellen fließen muss und eine Batteriezelle nur einen begrenzten Strom leiten kann, werden oft zusätzlich Batteriezellen parallel geschaltet, um den maximalen Strom zu erhöhen.

Die Serienschaltung mehrerer Batteriezellen bringt neben einer hohen Gesamtspannung das Problem mit sich, dass der gesamte Energiespeicher ausfällt, wenn eine einzige Batteriezelle ausfällt, weil dann kein Batteriestrom mehr fließen kann. Ein solcher Ausfall des Energiespeichers kann zu einem Ausfall des Gesamtsystems führen. Bei einem Fahrzeug kann ein Ausfall der Antriebsbatterie zum "Liegenbleiben" des Fahrzeugs führen. Bei anderen Anwendungen, wie z.B. der Rotorblattverstellung von Windkraftanlagen, kann es bei ungünstigen Rahmenbedingungen, wie z.B. starkem Wind, sogar zu sicherheitsgefährdenden Situationen kommen. Daher ist stets eine hohe Zuverlässigkeit des Energiespeichers anzustreben, wobei mit "Zuverlässigkeit" die Fähigkeit eines Systems bezeichnet wird, für eine vorgegebene Zeit fehlerfrei zu arbeiten.

In den älteren Anmeldungen DE 10 2010 027 857 A1 und DE 10 2010 027 861 A1 sind Batterien mit mehreren Batteriemodulsträngen beschrieben, welche direkt an eine elektrische Maschine anschließbar sind. Die Batteriemodulstränge weisen dabei eine Mehrzahl von in Serie geschalteten Batteriemodulen auf, wobei jedes Batteriemodul mindestens eine Batteriezelle und eine zugeordnete steuerbare Koppeleinheit aufweist, welche es erlaubt in Abhängigkeit von Steuersignalen den jeweiligen Batteriemodulstrang zu unterbrechen oder die jeweils zugeordnete mindestens eine Batteriezelle zu überbrücken oder die jeweils zugeordnete mindestens eine Batteriezelle in den jeweiligen Batteriemodulstrang zu schalten. Durch geeignete Ansteuerung der Koppeleinheiten, z.B. mit Hilfe von Pulsweitenmodulation, können auch geeignete Phasensignale zur Steuerung der elektrischen Maschine bereitgestellt werden, so dass auf einen separaten Pulswechselrichter verzichtet werden kann. Der zur Steuerung der elektrischen Maschine erforderliche Pulswechselrichter ist damit sozusagen in die Batterie integriert.

Die Druckschrift WO 2008/086760 A1 offenbart ein Verfahren zum Laden und Entladen von Energiespeichern in einem modularen Umrichter, welcher mehrere Energieversorgungszweige aus Reihenschaltungen von selektiv zuschaltbaren Energiespeichermodulen mit Energiespeichern.

### Offenbarung der Erfindung

Die Erfindung ist durch die Merkmale der unabhängigen Ansprüche definiert. Weitere Ausführungsformen werden in den abhängigen Ansprüchen offenbart. Die vorliegende Erfindung schafft ein System zum Laden mindestens einer Energiespeicherzelle in einem steuerbaren Energiespeicher, welcher der Steuerung und der elektrischen Energieversorgung einer n-phasigen elektrischen Maschine, mit n ≥ 2, dient. Dabei weist der steuerbare Energiespeicher n parallele Energieversorgungszweige auf, welche jeweils mindestens zwei in Reihe geschaltete Energiespeichermodule aufweisen, welche jeweils mindestens eine elektrische Energiespeicherzelle mit einer zugeordneten steuerbaren Koppeleinheit umfassen. Die Energieversorgungszweige sind einerseits mit einem Bezugspotential - im Folgenden als Bezugsschiene bezeichnet - und andererseits mit jeweils einer Phase der elektrischen Maschine verbunden. In Abhängigkeit von Steuersignalen unterbrechen die Koppeleinheiten entweder den jeweiligen Energieversorgungszweig oder sie isolieren durch ein erstes Schaltelement, welches mit den zugeordneten Energiespeicherzellen in dem jeweiligen Energieversorgungszweig durch ein zweites Schaltelement überbrückt wird, die jeweils zugeordneten Energiespeicherzellen oder sie schalten die jeweils zugeordneten Energiespeicherzellen in den jeweiligen Energieversorgungszweig. Um das Laden von zumindest einer der Energiespeicherzellen zu ermöglichen, sind mindestens zwei Phasen der elektrischen Maschine über jeweils mindestens eine Freilaufdiode mit einem Minuspol einer Ladeeinrichtung verbindbar. Ebenso ist die Bezugsschiene mit dem Minuspol der Ladeeinrichtung verbindbar. Außerdem weisen diejenigen Energieversorgungszweige, welche mit den Phasen verbunden sind, welche mit dem Minuspol der Ladeeinrichtung verbindbar sind, jeweils eine Kontaktstelle auf, welche zwischen zwei Energiespeichermodulen angeordnet ist und über mindestens eine Freilaufdiode mit einem Pluspol der Ladeeinrichtung verbindbar ist. Die Ladeeinrichtung kann dann eine Gleichspannung zur Ladung mindestens einer Energiespeicherzelle zur Verfügung stellen. Mindestens ein Energieversorgungszweig mit Kontaktstelle und ohne zu ladende Energiespeicherzellen dient dann als Steuerzweig, wobei mindestens eine Koppeleinheit, welche in einem Steuerzweig zwischen der Kontaktstelle und der mit dem Steuerzweig verbundenen Phase der elektrischen Maschine liegt, derart ansteuerbar ist, dass abwechselnd die jeweils zugeordneten Energiespeicherzellen durch ein erstes Schaltelement der zugeordneten steuerbaren Koppeleinheit isoliert werden und dieses erste Schaltelement sowie die zugeordneten Energiespeicherzellen in dem Steuerzweig durch ein zweites Schaltelement überbrückt werden, oder der Steuerzweig unterbrochen wird. Alle übrigen Koppeleinheiten des Steuerzweiges, welche zwischen der Kontaktstelle und der mit dem Steuerzweig verbundenen Phase der elektrischen Maschine liegen, sind derart ansteuerbar, dass die jeweils zugeordneten Energiespeicherzellen durch ein erstes Schaltelement der zugeordneten steuerbaren Koppeleinheit isoliert werden und dieses erste Schaltelement sowie die zugeordneten Energiespeicherzellen in dem Steuerzweig durch ein zweites Schaltelement überbrückt werden.

Die Erfindung schafft außerdem ein Verfahren zum Betrieb eines erfindungsgemäßen Ladesystems für eine n-phasige elektrische Maschine, mit n ≥ 2. Dabei werden mindestens zwei Phasen der n-phasigen elektrischen Maschine, mit n ≥ 2, über jeweils mindestens eine Freilaufdiode elektrisch mit dem Minuspol der Ladeeinrichtung verbunden. Ebenso wird die Bezugsschiene mit dem Minuspol der Ladeeinrichtung verbunden Außerdem werden die Kontaktstellen über jeweils mindestens eine Freilaufdiode mit dem Pluspol der Ladeeinrichtung verbunden. Alle Koppeleinheiten, welche zu ladenden Energiespeicherzellen zugeordnet sind, werden derart gesteuert, dass die jeweils zugeordneten Energiespeicherzellen in den Energieversorgungszweig geschaltet werden.

Alle Koppeleinheiten, welche in dem Energieversorgungszweig von zu ladenden Energiespeicherzellen liegen, selbst aber keinen zu ladenden Energiespeicherzellen zugeordnet sind, werden derart gesteuert, dass die jeweils zugeordneten Energiespeicherzellen durch ein erstes Schaltelement der zugeordneten steuerbaren Koppeleinheit isoliert werden und dieses erste Schaltelement sowie die zugeordneten Energiespeicherzellen in dem Energieversorgungszweig durch ein zweites Schaltelement überbrückt werden. Mindestens ein Energieversorgungszweig mit Kontaktstelle und ohne zu ladende Energiespeicherzellen dient dann als Steuerzweig, wobei mindestens eine Koppeleinheit, welche in einem Steuerzweig zwischen der Kontaktstelle und der mit dem Steuerzweig verbundenen Phase der elektrischen Maschine liegt, derart angesteuert wird, dass abwechselnd die jeweils zugeordneten Energiespeicherzellen durch ein erstes Schaltelement der zugeordneten steuerbaren Koppeleinheit isoliert werden und dieses erste Schaltelement sowie die zugeordneten Energiespeicherzellen in dem Steuerzweig durch ein zweites Schaltelement überbrückt werden, oder der Steuerzweig unterbrochen wird. Alle übrigen Koppeleinheiten des Steuerzweiges, welche zwischen der Kontaktstelle und der mit dem Steuerzweig verbundenen Phase der elektrischen Maschine liegen, werden derart angesteuert, dass die jeweils zugeordneten Energiespeicherzellen durch ein erstes Schaltelement der zugeordneten steuerbaren Koppeleinheit isoliert werden und dieses erste Schaltelement sowie die zugeordneten Energiespeicherzellen in dem Steuerzweig durch ein zweites Schaltelement überbrückt werden. Alle übrigen Koppeleinheiten werden derart gesteuert, dass der jeweilige Energieversorgungszweig unterbrochen wird.

### Vorteile der Erfindung

Die Erfindung basiert auf der Grundidee, die Koppeleinheiten einerseits und die Statorwicklungen der elektrischen Maschine andererseits für eine Ladefunktion mitzunutzen. Dies wird dadurch realisiert, dass die Koppeleinheiten und die Statorwicklungen während eines Ladevorgangs analog zu einem Tiefsetzsteller betrieben werden, wobei mindestens ein mit der Ladeeinrichtung verbundener Energieversorgungszweig, der selbst keine zu ladenden Energiespeicherzellen aufweist als Steuerzweig dient. Die Höhe der Ausgangsspannung des "Tiefsetzstellers" wird dann durch entsprechende Ansteuerung, z.B. durch Pulsweitenmodulation des Ansteuersignals, mindestens einer Koppeleinheit, welche zwischen der Kontaktstelle des Steuerzweiges und der mit dem Steuerzweig verbundenen Phase der elektrischen Maschine liegt, eingestellt. Dabei entsteht nur minimaler zusätzlicher Hardware-Aufwand für die notwendigen Freilaufdioden, was mit geringen Kosten und geringem Platzbedarf einhergeht.

Mit den erfindungsgemäßen Systemen und Verfahren ist sowohl die Ladung von Energiespeicherzellen eines einzelnen Energiespeichermoduls als auch die gleichzeitige Ladung von Energiespeicherzellen mehrerer Energiespeichermodule möglich. Im Fall einer mindestens dreiphasigen elektrischen Maschine können auch die Energiespeicherzellen von Energiespeichermodulen, welche in verschiedenen Energieversorgungszweigen liegen, gleichzeitig geladen werden.

Stehen mehrere Energieversorgungszweige zur Verfügung, welche über eine Kontaktstelle mit dem Pluspol der Ladeeinrichtung verbunden sind und selbst keine zu ladenden Energiespeicherzellen aufweisen, so kann entweder nur einer dieser Energieversorgungszweige als Steuerzweig genutzt werden oder es können auch mehrere oder alle derartigen Energieversorgungszweige die Funktion eines Steuerzweiges übernehmen. Die Verwendung mehrerer paralleler Steuerzweige bietet den Vorteil, dass auf diese Weise niedrigere Durchlasswiderstände realisierbar sind.

Für die Anwendbarkeit der Erfindung ist es ausreichend dass eine einzige Koppeleinheit, welche in einem Steuerzweig zwischen der Kontaktstelle und der mit dem Steuerzweig verbundenen Phase der elektrischen Maschine liegt, derart angesteuert wird, dass abwechselnd die jeweils zugeordneten Energiespeicherzellen überbrückt werden oder der Steuerzweig unterbrochen wird. Alternativ dazu können aber auch mehrere oder alle Koppeleinheiten, welche in dem Steuerzweig zwischen der Kontaktstelle und der mit Steuerzweig verbundenen Phase der elektrischen Maschine liegen, entsprechend angesteuert werden.

Aufgabe der Ladeeinrichtung ist es lediglich, eine geeignete Gleichspannung zur Verfügung zu stellen. Insofern kann die Ladeeinrichtung auf verschiedenen Wegen realisiert sein. Sie kann z.B. als Netzladegerät ausgestaltet sein. Dabei ist es für die Anwendbarkeit der Erfindung auch unerheblich, ob das Netzladegerät ein- oder dreiphasig oder ob es galvanisch getrennt oder verbindend ausgestaltet ist. Umfasst die Ladeeinrichtung einen Gleichspannungswandler (DC/DC-Wandler) kann dieser aufgrund der zusätzlichen Anpassstufe, welche über die als Tiefsetzsteller betriebenen Koppeleinheiten und Statorwicklungen geschaffen wird, auf eine feste Ausgangsspannung ausgelegt werden, was sich vorteilhaft auf dessen Wirkungsgrad, Bauraum und Kosten auswirkt.

Gemäß einer Ausführungsform der Erfindung ist es vorgesehen, dass der Minuspol der Ladeeinrichtung über jeweils mindestens eine Freilaufdiode mit allen Phasen der elektrischen Maschine verbindbar ist und alle Energieversorgungszweige jeweils eine Kontaktstelle aufweisen, welche zwischen zwei Energiespeichermodulen angeordnet ist und über mindestens eine Freilaufdiode mit dem Pluspol der Ladeeinrichtung verbindbar ist. Auf diese Weise stehen zumindest für die Ladung von Energiespeicherzellen in nur einem Energieversorgungszweig immer mindestens zwei parallele Steuerzweige zur Verfügung, mit deren Hilfe niedrigere Durchlasswiderstände realisierbar sind.

Unerwünschte Momente während des Ladevorgangs können dadurch vermieden werden, dass die elektrische Maschine während des Ladevorgangs mechanisch blockiert wird, z.B. mit Hilfe einer Getriebesperrklinke. Alternativ kann auch die Rotorlage der elektrischen Maschine überwacht werden, z.B. mit Hilfe einer entsprechenden Sensorik, und im Falle einer detektierten Rotorbewegung abgeschaltet werden.

Sind die Induktivitäten der Statorwicklungen der elektrischen Maschine nicht ausreichend, so kann zwischen die Ladeeinrichtung und die elektrische Maschine oder zwischen die Ladeeinrichtung und den steuerbaren Energiespeicher eine zusätzliche Ladeinduktivität geschaltet sein.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung eines erfindungsgemäßen Ladesystems in einer Ladephase und
- Fig. 2: das Ladesystem gemäß Fig. 1 in einer Freilaufphase

### Ausführungsformen der Erfindung

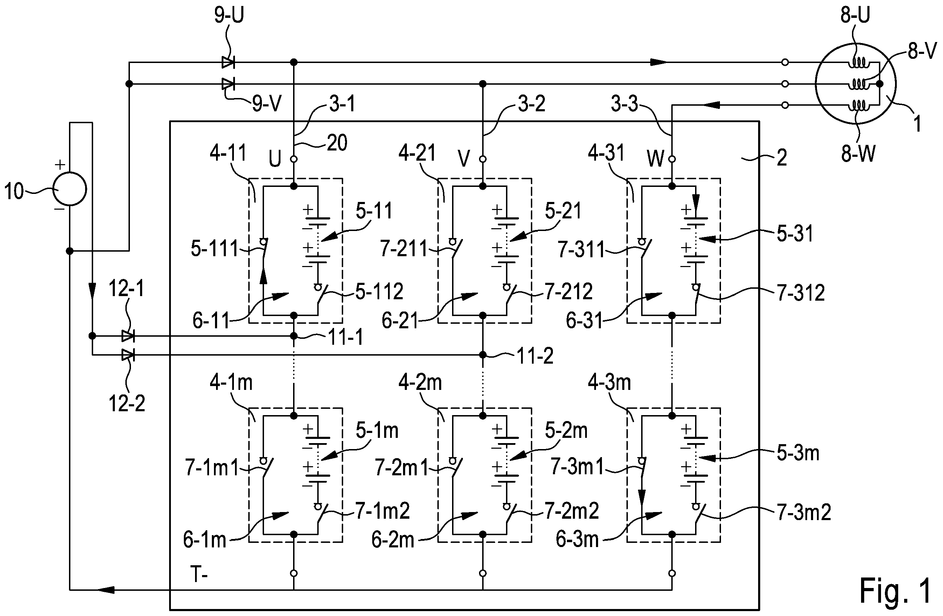

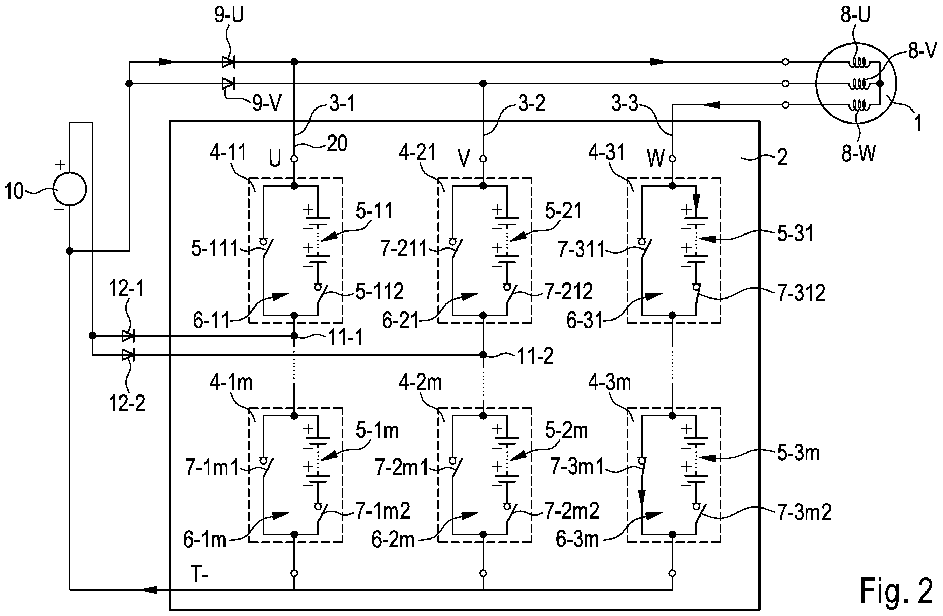

Die Figuren 1 und 2 zeigen eine schematische Darstellung eines erfindungsgemäßen Ladesystems. An eine dreiphasige elektrische Maschine 1 ist ein steuerbarer Energiespeicher 2 angeschlossen. Der steuerbare Energiespeicher 2 umfasst drei Energieversorgungszweige 3-1, 3-2 und 3-3, welche einerseits mit einem Bezugspotential T- (Bezugsschiene), welches in der dargestellten Ausführungsform ein niedriges Potential führt, und andererseits jeweils mit einzelnen Phasen U, V, W der elektrischen Maschine 1 verbunden sind. Jeder der Energieversorgungszweige 3-1, 3-2 und 3-3 weist m in Reihe geschaltete Energiespeichermodule 4-11 bis 4-1m bzw. 4-21 bis 4-2m bzw. 4-31 bis 4-3m auf, wobei m ≥ 2. Die Energiespeichermodule 4 wiederum umfassen jeweils mehrere in Reihe geschaltete elektrische Energiespeicherzellen 5-11 bis 5-1m bzw. 5-21 bis 5-2m bzw. 5-31 bis 5-3m versehen sind. Die Energiespeichermodule 4 umfassen des Weiteren jeweils eine Koppeleinheit 6-11 bis 6-1m bzw. 6-21 bis 6-2m bzw. 6-31 bis 6-3m, welche den Energiespeicherzellen 5 des jeweiligen Energiespeichermoduls 4 zugeordnet ist. In der dargestellten Ausführungsvariante werden die Koppeleinheiten 6 jeweils durch zwei steuerbare Schaltelemente 7-111 und 7-112 bis 7-1m1 und 7-1m2 bzw. 7-211 und 7-212 bis 7-2m1 und 7-2m2 bzw. 7-311 und 7-312 bis 7-3m1 und 7-3m2 gebildet. Die Schaltelemente können dabei als Leistungshalbleiterschalter, z.B. in Form von IGBTs (Insulated Gate Bipolar Transistors) oder als MOSFETs (Metal Oxide Semiconductor Field-Effect Transistors), ausgeführt sein.

Die Koppeleinheiten 6 ermöglichen es, den jeweiligen Energieversorgungszweig 3, durch Öffnen beider Schaltelemente 7 einer Kopplungseinheit 6 zu unterbrechen. Alternativ können die Energiespeicherzellen 5 durch Schließen jeweils eines der Schaltelemente 7 einer Koppeleinheit 6 entweder überbrückt werden, z.B. Schließen des Schalters 7-311 oder in den jeweiligen Energieversorgungszweig 3 geschaltet werden, z.B. Schließen des Schalters 7-312.

Die Gesamt-Ausgangsspannungen der Energieversorgungszweige 3-1 bis 3-3 werden bestimmt durch den jeweiligen Schaltzustand der steuerbaren Schaltelemente 7 der Koppeleinheiten 6 und können stufig eingestellt werden. Die Stufung ergibt sich dabei in Abhängigkeit von der Spannung der einzelnen Energiespeichermodule 4. Geht man von der bevorzugten Ausführungsform gleichartig ausgestalteter Energiespeichermodule 4 aus, so ergibt sich eine maximal mögliche Gesamt-Ausgangsspannung aus der Spannung eines einzelnen Energiespeichermoduls 4 mal der Anzahl m der pro Energieversorgungszweig in Reihe geschalteten Energiespeichermodule 4.

Die Koppeleinheiten 6 erlauben es damit, die Phasen U, V, W der elektrischen Maschine 1 entweder gegen ein hohes Bezugspotential oder ein niedriges Bezugspotential zu schalten und können insofern auch die Funktion eines bekannten Wechselrichters erfüllen. Damit können Leistung und Betriebsart der elektrischen Maschine 1 bei geeigneter Ansteuerung der Koppeleinheiten 6 durch den steuerbaren Energiespeicher 2 gesteuert werden. Der steuerbare Energiespeicher 2 erfüllt also insofern eine Doppelfunktion, da er einerseits der elektrischen Energieversorgung andererseits aber auch der Steuerung der elektrischen Maschine 1 dient.

Die elektrische Maschine 1 weist Statorwicklungen 8-U, 8-V und 8-W auf, die in bekannter Weise in Sternschaltung miteinander verschaltet sind.

Die elektrische Maschine 1 ist im dargestellten Ausführungsbeispiel als dreiphasige Drehstrommaschine ausgeführt, kann aber auch nur zwei oder mehr als drei Phasen aufweisen. Nach der Phasenanzahl der elektrischen Maschine richtet sich natürlich auch die Anzahl der Energieversorgungszweige 3 in dem steuerbaren Energiespeicher 2.

Im dargestellten Ausführungsbeispiel weist jedes Energiespeichermodul 4 jeweils mehrere in Reihe geschaltete Energiespeicherzellen 5 auf. Die Energiespeichermodule 4 können aber alternativ auch jeweils nur eine einzige Energiespeicherzelle oder auch parallel geschaltete Energiespeicherzellen aufweisen.

Im dargestellten Ausführungsbeispiel werden die Koppeleinheiten 6 jeweils durch zwei steuerbare Schaltelemente 7 gebildet. Die Koppeleinheiten 6 können aber auch durch mehr oder weniger steuerbare Schaltelemente realisiert sein, solange die notwendigen Funktionen (Unterbrechen des Energieversorgungszweiges, Überbrücken der Energiespeicherzellen und Schalten der Energiespeicherzellen in den Energieversorgungszweig) realisierbar sind. Beispielhafte alternative Ausgestaltungen einer Koppeleinheit ergeben sich aus den älteren Anmeldungen DE 10 2010 027 857 A1 und DE 10 2010 027 861 A1 . Darüber hinaus ist es aber auch denkbar, dass die Koppeleinheiten Schaltelemente in Vollbrückenschaltung aufweisen, was die zusätzliche Möglichkeit einer Spannungsumkehr am Ausgang des Energiespeichermoduls bietet.

Um die Ladung von Energiespeicherzellen 5 eines oder mehrerer Energiespeichermodule 4 zu ermöglichen, werden die beiden Phasen U und V über jeweils eine Freilaufdiode 9-U bzw. 9-V elektrisch mit einem Minuspol einer Ladeeinrichtung 10, welche in Form eines Ersatzschaltbildes als Gleichspannungsquelle dargestellt ist, verbunden. Die Ladeeinrichtung 10 stellt eine zum Laden der Energiespeicherzellen 5 geeignete Gleichspannung zur Verfügung und kann z.B. als Netzladegerät (ein- oder dreiphasig, galvanisch getrennt oder verbindend) ausgestaltet sein. Der Minuspol der Ladeeinrichtung 10 wird auch mit der Bezugsschiene T- verbunden. Die Energieversorgungszweige 3-1 und 3-2, welche mit den beiden mit der Ladeeinrichtung 10 verbundenen Phasen U bzw. V verbunden sind, weisen jeweils eine Kontaktstelle 11-1 bzw. 11-2 auf, welche jeweils zwischen zwei Energiespeichermodulen 4 des jeweiligen Energieversorgungszweiges 3-1 bzw. 3-2, angeordnet sind. Im konkret dargestellten Ausführungsbeispiel sind die beiden Kontaktstellen 11-1 und 11-2 jeweils zwischen dem Energiespeichermodul 4-11 bzw. 5-11 welches der Phase U bzw. V der elektrischen Maschine 1 jeweils am nächsten liegt und einem nachfolgenden Energiespeichermodul 4-12 bzw. 4-22 angeordnet. Die Kontaktstellen 11-1 und 11-2 können aber alternativ auch zwischen zwei beliebigen anderen Energiespeichermodulen 4 des jeweiligen Energieversorgungszweiges angeordnet sein. Die Kontaktstellen 11-1 und 11-2 sind über jeweils eine Freilaufdiode 12-1 bzw. 12-2 elektrisch mit einem Pluspol der Ladeeinrichtung 10 verbunden.

Im Folgenden wird exemplarisch der Ladevorgang der Energiespeicherzellen 5 eines einzelnen Energiespeichermoduls 4, nämlich der Energiespeicherzellen 5-3.1 des Energiespeichermoduls 4-31 in dem Energieversorgungszweig 3-3 beschrieben.

Während einer Ladephase, welche in Fig. 1 dargestellt ist, werden alle Koppeleinheiten 6-31, welche zu ladenden Energiespeicherzellen 5-31 zugeordnet sind, durch eine nicht dargestellte Steuereinheit derart gesteuert, dass die jeweils zugeordneten Energiespeicherzellen 5-31 in den Energieversorgungszweig 3-3 geschaltet werden. Dies wird konkret dadurch erreicht, dass das Schaltelement 7-311 geschlossen wird, wohingegen das Schaltelement 7-312 geöffnet wird. Alle Koppeleinheiten 6-32 bis 6-3m, welche in dem Energieversorgungszweig 3-3 von zu ladenden Energiespeicherzellen 5-31 liegen, selbst aber keinen zu ladenden Energiespeicherzellen 5-32 bis 5-3m zugeordnet sind, werden derart gesteuert, dass die jeweils zugeordneten Energiespeicherzellen 5-32 bis 5-3m überbrückt werden. Dies wird konkret dadurch erreicht, dass die Schaltelemente 7-321 bis 7-3m1 geschlossen werden, wohingegen die Schaltelemente 7-322 bis 7-3m2 geöffnet werden. Ein Energieversorgungszweig, im dargestellten Ausführungsbeispiel der Energieversorgungszweig 3-1, welcher die Kontaktstelle 11-1 aber keine zu ladende Energiespeicherzelle 5 aufweist, dient als Steuerzweig 20. Die Koppeleinheit 6-11, welche in dem Energieversorgungszweig 3-1 und damit in dem Steuerzweig 20 zwischen der Kontaktstelle 11-1 und der dem Energieversorgungszweig zugeordneten Phase U der elektrischen Maschine U liegt, wird während der Ladephase derart angesteuert, dass die zugeordneten Energiespeicherzellen 5-11 überbrückt werden. Dies wird konkret dadurch erreicht, dass das Schaltelement 7-111 geschlossen wird, wohingegen das Schaltelement 7-312 geöffnet wird. Alle übrigen Koppeleinheiten, das heißt im konkreten Ausführungsbeispiel die Koppeleinheiten 6-12 bis 6-1m des Steuerkreises 20, welche zwischen der Kontaktstelle 11-1 und der Bezugsschiene T- liegen, und die Koppeleinheiten 6-21 bis 6-2m, welche in dem der Phase V zugeordneten Energieversorgungszweig 3-2 liegen, werden derart gesteuert, dass der jeweilige Energieversorgungszweig 3-1 bzw. 3-2 unterbrochen wird. Konkret wird dies dadurch erreicht, dass jeweils beide Schaltelemente 7 der Koppeleinheiten 6 geöffnet werden.

Eine derartige Ansteuerung der Koppeleinheiten 6 bewirkt einen Stromfluss von der Ladeeinrichtung 10 über die Freilaufdiode 12-1 und die Koppeleinheit 6-11 durch die Statorwicklungen 8-U und 8-W und die zu ladenden Energiespeicherzellen 5-31. Während der Ladephase wird in den Statorwicklungen 8-U und 8-W elektrische Energie gespeichert.

In einer der Ladephase folgenden Freilaufphase, welche in Fig. 2 dargestellt ist, wird die Koppeleinheit 6-31, welche den zu ladenden Energiespeicherzellen 5-31 zugeordnet ist, weiterhin derart gesteuert, dass die zugeordneten Energiespeicherzellen 5-31 in den Energieversorgungszweig 3-3 geschaltet werden. Alle übrigen Koppeleinheiten 6-32 bis 6-3m, welche in dem Energieversorgungszweig 3-3 der zu ladenden Energiespeicherzellen 5-31 liegen, die selbst aber keinen zu ladenden Energiespeicherzellen zugeordnet sind, werden weiterhin derart gesteuert, dass die jeweils zugeordneten Energiespeicherzellen überbrückt werden (Schließen der Schaltelemente 7-321 bis 7-3m1 und Öffnen der Schaltelemente 7-322 bis 7-3m2). Die Koppeleinheiten 6-11 bis 6-1m und 6-21 bis 6-2m in den übrigen Energieversorgungszweigen 3-1 und 3-2 werden derart gesteuert, dass die jeweiligen Energieversorgungszweige 3-1 und 3-2 unterbrochen werden.

Während der Freilaufphase treibt die Induktivität der Statorwicklungen 8-U und 8-V den Strom weiter, wobei dieser während der Freilaufphase nicht über die Koppeleinheit 6-11, sondern über die Freilaufdiode 9-U fließt.

Durch geregeltes abwechselndes Schließen (Ladephase) und Öffnen (Freilaufphase) des Schaltelements 7-111, welches z.B. durch entsprechende Pulsweitenmodulation des Ansteuersignals erzielbar ist, kann die jeweilige Ladespannung eingestellt werden.

Sind zwischen der Kontaktstelle 11-1 des Steuerzweiges 20 und der zugehörigen Phase U der elektrischen Maschine 1 entgegen der in den Fig. 1 und 2 dargestellten Ausführungsform mehr als ein Energiespeichermodul 4 angeordnet, so kann entweder weiterhin eine einzige Koppeleinheit, z.B. die Koppeleinheit 6-11, welche in dem Steuerzweig 20 zwischen der Kontaktstelle 11-1 und der mit dem Steuerzweig 20 verbundenen Phase U der elektrischen Maschine 1 liegt, derart angesteuert werden, dass abwechselnd die jeweils zugeordneten Energiespeicherzellen überbrückt werden oder der Steuerzweig unterbrochen wird. Alternativ dazu können aber auch mehrere oder alle Koppeleinheiten 6, welche in dem Steuerzweig 20 zwischen der Kontaktstelle 11-1 und der mit Steuerzweig 20 verbundenen Phase U der elektrischen Maschine 1 liegen, entsprechend angesteuert werden.

Außerdem ist es möglich, weitere Energieversorgungszweige 3, wie im dargestellten Ausführungsbeispiel den Energieversorgungszweig 3-2, welche über eine Kontaktstelle, im Beispiel die Kontaktstelle 11-2 , mit dem Pluspol der Ladeeinrichtung 10 verbunden sind und selbst keine zu ladenden Energiespeicherzellen 5 aufweisen, als Steuerzweige mit entsprechender Ansteuerung der zugehörigen Koppeleinheiten 6 zu nutzen. Die Verwendung mehrerer paralleler Steuerzweige bietet den Vorteil, dass auf diese Weise niedrigere Durchlasswiderstände realisierbar sind.

Reichen die Motorinduktivitäten nicht aus, kann eine zusätzliche externe Ladeinduktivität eingesetzt werden, welche zwischen die Ladeeinrichtung 10 und die elektrische Maschine 1 oder zwischen die Ladeeinrichtung 10 und den steuerbaren Energiespeicher 2 geschaltet wird.

Wird auch die dritte Phase W der elektrischen Maschine 1 über eine nicht dargestellte Freilaufdiode mit dem Minuspol der Ladeeinrichtung 10 verbunden und auch der zugehörige Energieversorgungszweig 3-3 über eine nicht dargestellte Kontaktstelle und eine ebenfalls nicht dargestellte Freilaufdiode mit dem Pluspol der Ladeeinrichtung verbunden, so stehen zumindest für die Ladung von Energiespeicherzellen in nur einem Energieversorgungszweig immer mindestens zwei parallele Steuerzweige zur Verfügung. Auf diese Weise sind niedrigere Durchlasswiderstände realisierbar.

Unerwünschte Momente während des Ladevorgangs können dadurch vermieden werden, dass die elektrische Maschine 1 während des Ladevorgangs mechanisch blockiert wird, z.B. mit Hilfe einer Getriebesperrklinke. Alternativ kann auch die Rotorlage der elektrischen Maschine 1 überwacht werden, z.B. mit Hilfe einer entsprechenden Sensorik, und im Falle einer detektierten Rotorbewegung abgeschaltet werden.

## Patentansprüche

1. System zum Laden mindestens einer Energiespeicherzelle (5) in einem steuerbaren Energiespeicher (2), welcher der Steuerung und der elektrischen Energieversorgung einer n-phasigen elektrischen Maschine (1), mit n ≥ 2, dient, wobei
- der steuerbare Energiespeicher (2) n parallele Energieversorgungszweige (3-1, 3-2, 3-3) aufweist, welche
▪ jeweils mindestens zwei in Reihe geschaltete Energiespeichermodule (4) aufweisen, welche jeweils mindestens eine elektrische Energiespeicherzelle (5) mit einer zugeordneten steuerbaren Koppeleinheit (6) umfassen,
▪ einerseits mit einer Bezugsschiene (T-) verbunden sind und
▪ andererseits mit jeweils einer Phase (U, V, W) der elektrischen Maschine (1) verbunden sind,
- die Koppeleinheiten (6) konfiguriert sind, in Abhängigkeit von Steuersignalen den jeweiligen Energieversorgungszweig (3-1; 3-2; 3-3) zu unterbrechen, oder die jeweils zugeordneten Energiespeicherzellen (5) durch ein erstes Schaltelement (7) der zugeordneten steuerbaren Koppeleinheit (6) zu isolieren und dieses erste Schaltelement (7) sowie die zugeordneten Energiespeicherzellen (5) in dem jeweiligen Energieversorgungszweig (3-1; 3-2; 3-3) durch ein zweites Schaltelement (7) zu überbrücken, oder die jeweils zugeordneten Energiespeicherzellen (5) in den jeweiligen Energieversorgungszweig (3-1; 3-2; 3-3) zu schalten,
- **dadurch gekennzeichnet, dass**
- mindestens zwei Phasen (U, V) der elektrischen Maschine (1) über jeweils mindestens eine Freilaufdiode (9-U, 9-V) mit einem Minuspol einer Ladeeinrichtung (10) verbindbar sind, welche eine Gleichspannung zur Ladung mindestens einer Energiespeicherzelle (5) zur Verfügung stellt,
- die Bezugsschiene (T-) mit dem Minuspol der Ladeeinrichtung (10) verbindbar ist,
- diejenigen Energieversorgungszweige (3-1, 3-2), welche mit den Phasen (U, V) verbunden sind, welche mit dem Minuspol der Ladeeinrichtung (10) verbindbar sind, jeweils eine Kontaktstelle (11-1, 11-2) aufweisen, welche zwischen zwei Energiespeichermodulen (4) angeordnet ist und über mindestens eine Freilaufdiode (12-1, 12-2) mit einem Pluspol der Ladeeinrichtung (10) verbindbar ist, und
- mindestens ein Energieversorgungszweig (3-1) mit Kontaktstelle (11-1) und ohne zu ladende Energiespeicherzelle (5) als Steuerzweig (20) dient, wobei
▪ mindestens eine Koppeleinheit (6-11), welche in dem Steuerzweig (20) zwischen der Kontaktstelle (11-1) und der mit dem Steuerzweig (20) verbundenen Phase (U) der elektrischen Maschine (1) liegt, derart ansteuerbar ist, dass abwechselnd die jeweils zugeordneten Energiespeicherzellen (5-11) durch ein erstes Schaltelement (7) der zugeordneten steuerbaren Koppeleinheit (6) isoliert werden und dieses erste Schaltelement (7) sowie die zugeordneten Energiespeicherzellen (5) in dem Steuerzweig (20) durch ein zweites Schaltelement (7) überbrückt werden, oder der Steuerzweig (20) unterbrochen wird, und
▪ alle übrigen Koppeleinheiten des Steuerzweiges (20), welche zwischen der Kontaktstelle (11-1) und der mit dem Steuerzweig (20) verbundenen Phase (U) der elektrischen Maschine (1) liegen, derart ansteuerbar sind, dass die jeweils zugeordneten Energiespeicherzellen (5) durch ein erstes Schaltelement (7) der zugeordneten steuerbaren Koppeleinheit (6) isoliert werden und dieses erste Schaltelement (7) sowie die zugeordneten Energiespeicherzellen (5) in dem Steuerzweig (20) durch ein zweites Schaltelement (7) überbrückt werden.

2. System nach Anspruch 1, wobei alle Phasen (U, V, W) der elektrischen Maschine (1) über jeweils mindestens eine Freilaufdiode (9) mit dem Minuspol der Ladeeinrichtung (10) und alle Energieversorgungszweige (3-1, 3-2, 3-3) jeweils eine Kontaktstelle (11) aufweisen, welche zwischen zwei Energiespeichermodulen (4) angeordnet sind und über mindestens eine Freilaufdiode (12) mit dem Pluspol der Ladeeinrichtung (10) verbindbar sind.

3. System nach einem der Ansprüche 1 oder 2, wobei zwischen die Ladeeinrichtung (10) und die elektrische Maschine (1) oder zwischen die Ladeeinrichtung (10) und den steuerbaren Energiespeicher (2) eine zusätzliche Ladeinduktivität geschaltet ist.

4. Verfahren zum Betrieb eines Ladesystems gemäß einem der Ansprüche 1 bis 3, **dadurch gekennzeichnet, dass**
- mindestens zwei Phasen (U, V) der n-phasigen elektrischen Maschine (1), mit n ≥ 2, über jeweils mindestens eine Freilaufdiode (9-U, 9-V) mit dem Minuspol der Ladeeinrichtung (10), die Bezugsschiene (T-) ebenfalls mit dem Minuspol der Ladeeinrichtung (10) und die Kontaktstellen (11-1, 11-2) über jeweils mindestens eine Freilaufdiode (12-1, 12-2) mit dem Pluspol der Ladeeinrichtung (10) verbunden werden,
- alle Koppeleinheiten (6-31), welche zu ladenden Energiespeicherzellen (5-31) zugeordnet sind, derart gesteuert werden, dass die jeweils zugeordneten Energiespeicherzellen (5-31) in den Energieversorgungszweig (3-3) geschaltet werden,
- alle Koppeleinheiten (6-32 bis 6-3m), welche in dem Energieversorgungszweig (3-3) von zu ladenden Energiespeicherzellen (5-31) liegen, selbst aber keinen zu ladenden Energiespeicherzellen (5-32 bis 5-3m) zugeordnet sind, derart gesteuert werden, dass die jeweils zugeordneten Energiespeicherzellen (5-32 bis 5-3m) durch ein erstes Schaltelement (7) der zugeordneten steuerbaren Koppeleinheit (6) isoliert werden und dieses erste Schaltelement (7) sowie die zugeordneten Energiespeicherzellen (5) in dem Energieversorgungszweig (3-3) durch ein zweites Schaltelement (7) überbrückt werden,
- mindestens ein Energieversorgungszweig (3-1) mit Kontaktstelle (11-1) und ohne zu ladender Energiespeicherzelle (5) als Steuerzweig (20) dient, wobei
▪ mindestens eine Koppeleinheit (6-11), welche in dem Steuerzweig (20) zwischen der Kontaktstelle (11-1) und der mit dem Steuerzweig (20) verbundenen Phase (U) der elektrischen Maschine (1) liegt, derart angesteuert wird, dass abwechselnd die jeweils zugeordneten Energiespeicherzellen (5-11) durch ein erstes Schaltelement (7) der zugeordneten steuerbaren Koppeleinheit (6) isoliert werden und dieses erste Schaltelement (7) sowie die zugeordneten Energiespeicherzellen (5) in dem Steuerzweig (20) durch ein zweites Schaltelement (7) überbrückt werden, oder der Steuerzweig (20) unterbrochen wird,
▪ alle übrigen Koppeleinheiten des Steuerzweiges (20), welche zwischen der Kontaktstelle (11-1) und der mit dem Steuerzweig (20) verbundenen Phase (U) der elektrischen Maschine (1) liegen, derart angesteuert werden, dass die jeweils zugeordneten Energiespeicherzellen (5) durch ein erstes Schaltelement (7) der zugeordneten steuerbaren Koppeleinheit (6) isoliert werden und dieses erste Schaltelement (7) sowie die zugeordneten Energiespeicherzellen (5) in dem Steuerzweig (20) durch ein zweites Schaltelement (7) überbrückt werden,
und
- alle übrigen Koppeleinheiten (6) derart gesteuert werden, dass der jeweilige Energieversorgungszweig (3-1; 3-2; 3-3) unterbrochen wird.

5. Verfahren nach Anspruch 4, wobei das abwechselnde Isolieren der jeweils zugeordneten Energiespeicherzellen (5-11) durch ein erstes Schaltelement (7) der zugeordneten steuerbaren Koppeleinheit (6) und Überbrücken dieses ersten Schaltelements (7) sowie der zugeordneten Energiespeicherzellen (5) in dem Steuerzweig (20) durch ein zweites Schaltelement (7), oder das Unterbrechen des Steuerzweigs (20) durch Pulsweitenmodulation eines Ansteuersignals der mindestens einen Koppeleinheit (6-11), welche in einem Steuerzweig zwischen der Kontaktstelle (11-1) und der mit dem Steuerzweig (20) verbundenen Phase (U) der elektrischen Maschine (1) liegt, erreicht wird.

## Claims

1. System for charging at least one energy storage cell (5) in a controllable energy store (2), which serves to control and supply electrical energy to an n-phase electric machine (1), where n ≥ 2, wherein
- the controllable energy store (2) has n parallel energy supply branches (3-1, 3-2, 3-3), which
• each have at least two energy storage modules (4) connected in series, which each comprise at least one electrical energy storage cell (5) having an associated controllable coupling unit (6),
• are connected on one side to a reference rail (T-) and
• are connected on the other side to in each case one phase (U, V, W) of the electric machine (1),
- the coupling units (6) are configured to interrupt the respective energy supply branch (3-1; 3-2; 3-3) depending on control signals, or to isolate the respectively associated energy storage cells (5) by way of a first switching element (7) of the associated controllable coupling unit (6) and to bypass said first switching element (7) and the associated energy storage cells (5) in the respective energy supply branch (3-1; 3-2; 3-3) by way of a second switching element (7), or to switch the respectively associated energy storage cells (5) into the respective energy supply branch (3-1; 3-2; 3-3),
- **characterized in that**
- at least two phases (U, V) of the electric machine (1) can be connected to a negative pole of a charging device (10) by means of in each case at least one freewheeling diode (9-U, 9-V), which charging device provides a DC voltage for the purpose of charging at least one energy storage cell (5),
- the reference rail (T-) can be connected to the negative pole of the charging device (10),
- those energy supply branches (3-1, 3-2) that are connected to the phases (U, V) that can be connected to the negative pole of the charging device (10) each have a contact point (11-1, 11-2), which is arranged between two energy storage modules (4) and can be connected to a positive pole of the charging device (10) by means of at least one freewheeling diode (12-1, 12-2), and
- at least one energy supply branch (3-1) having a contact point (11-1) and without an energy storage cell (5) to be charged serves as control branch (20), wherein
• at least one coupling unit (6-11), which is located in the control branch (20) between the contact point (11-1) and the phase (U) of the electric machine (1) connected to the control branch (20), can be actuated in such a way that the respectively associated energy storage cells (5-11) are isolated alternately by way of a first switching element (7) of the associated controllable coupling unit (6) and said first switching element (7) and the associated energy storage cells (5) in the control branch (20) are bypassed by way of a second switching element (7), or the control branch (20) is interrupted, and
• all other coupling units of the control branch (20), which are located between the contact point (11-1) and the phase (U) of the electric machine (1) connected to the control branch (20), can be actuated in such a way that the respectively associated energy storage cells (5) are isolated by way of a first switching element (7) of the associated controllable coupling unit (6) and said first switching element (7) and the associated energy storage cells (5) in the control branch (20) are bypassed by way of a second switching element (7).

2. System according to Claim 1, wherein all the phases (U, V, W) of the electric machine (1) can be connected to the negative pole of the charging device (10) by means of in each case at least one freewheeling diode (9) and all the energy supply branches (3-1, 3-2, 3-3) each have a contact point (11), which are arranged between two energy storage modules (4) and can be connected to the positive pole of the charging device (10) by means of at least one freewheeling diode (12).

3. System according to either of Claims 1 and 2, wherein an additional charging inductance is connected between the charging device (10) and the electric machine (1) or between the charging device (10) and the controllable energy store (2).

4. Method for operating a charging system according to one of Claims 1 to 3, **characterized in that**
- at least two phases (U, V) of the n-phase electric machine (1), wherein n ≥ 2, are connected to the negative pole of the charging device (10) by means of in each case at least one freewheeling diode (9-U, 9-V), the reference rail (T-) is likewise connected to the negative pole of the charging device (10) and the contact points (11-1, 11-2) are connected to the positive pole of the charging device (10) by means of in each case at least one freewheeling diode (12-1, 12-2),
- all the coupling units (6-31) that are associated with energy storage cells (5-31) to be charged are controlled in such a way that the respectively associated energy storage cells (5-31) are switched into the energy supply branch (3-3),
- all the coupling units (6-32 to 6-3m) that are located in the energy supply branch (3-3) of energy storage cells (5-31) to be charged but are not themselves associated with any energy storage cells (5-32 to 5-3m) to be charged are controlled in such a way that the respectively associated energy storage cells (5-32 to 5-3m) are isolated by way of a first switching element (7) of the associated controllable coupling unit (6) and said first switching element (7) and the associated energy storage cells (5) in the energy supply branch (3-3) are bypassed by way of a second switching element (7),
- at least one energy supply branch (3-1) having a contact point (11-1) and without an energy storage cell (5) to be charged serves as control branch (20), wherein
• at least one coupling unit (6-11), which is located in the control branch (20) between the contact point (11-1) and the phase (U) of the electric machine (1) connected to the control branch (20), is actuated in such a way that the respectively associated energy storage cells (5-11) are isolated alternately by way of a first switching element (7) of the associated controllable coupling unit (6) and said first switching element (7) and the associated energy storage cells (5) in the control branch (20) are bypassed by way of a second switching element (7), or the control branch (20) is interrupted,
• all other coupling units of the control branch (20), which are located between the contact point (11-1) and the phase (U) of the electric machine (1) connected to the control branch (20), are actuated in such a way that the respectively associated energy storage cells (5) are isolated by way of a first switching element (7) of the associated controllable coupling unit (6) and said first switching element (7) and the associated energy storage cells (5) in the control branch (20) are bypassed by way of a second switching element (7),
and
- all other coupling units (6) are controlled in such a way that the respective energy supply branch (3-1; 3-2; 3-3) is interrupted.

5. Method according to Claim 4, wherein the alternate isolation of the respectively associated energy storage cells (5-11) by way of a first switching element (7) of the associated controllable coupling unit (6) and bypassing of said first switching element (7) and the associated energy storage cells (5) in the control branch (20) by way of a second switching element (7), or the interruption of the control branch (20), is achieved by way of pulse-width modulation of a drive signal of the at least one coupling unit (6-11), which is located in a control branch between the contact point (11-1) and the phase (U) of the electric machine (1) connected to the control branch (20).

## Revendications

1. Système pour charger au moins une cellule d'accumulation d'énergie (5) dans un accumulateur d'énergie (2) commandable, lequel sert à la commande et à l'alimentation en énergie électrique d'une machine électrique (1) à n phases, avec n ≥ 2,
- l'accumulateur d'énergie (2) commandable possédant n branches d'alimentation en énergie (3-1, 3-2, 3-3) parallèles qui
* possèdent respectivement au moins deux modules d'accumulation d'énergie (4) branchés en série, lesquels comportent respectivement au moins une cellule d'accumulation d'énergie électrique (5) avec une unité de connexion (6) commandable associée,
* sont reliées d'un côté à une barre-bus de référence (T-) et
* sont reliées de l'autre côté respectivement à une phase (U, V, W) de la machine électrique (1),
- les unités de connexion (6) étant configurées pour, en fonction de signaux de commande, interrompre la branche d'alimentation en énergie (3-1, 3-2, 3-3) correspondante ou isoler les cellules d'accumulation d'énergie (5) respectivement associées par un premier élément de commutation (7) de l'unité de connexion (6) commandable associée et court-circuiter ce premier élément de commutation (7) ainsi que les cellules d'accumulation d'énergie (5) associées dans la branche d'alimentation en énergie (3-1, 3-2, 3-3) correspondante par un deuxième élément de commutation (7) ou commuter les cellules d'accumulation d'énergie (5) respectivement associées dans la branche d'alimentation en énergie (3-1, 3-2, 3-3) correspondante
- **caractérisé en ce que**
- au moins deux phases (U, V) de la machine électrique (1) peuvent être reliées, respectivement par le biais d'au moins une diode de roue libre (9-U, 9-V), à un pôle négatif d'un dispositif de charge (10) qui met à disposition une tension continue destinée à charger au moins une cellule d'accumulation d'énergie (5),
- la barre-bus de référence (T-) peut être reliée au pôle négatif du dispositif de charge (10),
- les branches d'alimentation en énergie (3-1, 3-2) qui sont reliées aux phases (U, V) qui peuvent être reliées au pôle négatif du dispositif de charge (10) possèdent respectivement un point de contact (11-1, 11-2) qui est disposé entre deux modules d'accumulation d'énergie (4) et qui peut être relié à un pôle positif du dispositif de charge (10) par le biais d'au moins une diode de roue libre (12-1, 12-2), et
- au moins une branche d'alimentation en énergie (3-1) avec oint de contact (11-1) et sans cellule d'accumulation d'énergie (5) à charger sert de branche de commande (20),
* au moins une unité de connexion (6-11), laquelle se trouve dans la branche de commande (20) entre le point de contact (11-1) et la phase (U) de la machine électrique (1) qui est reliée à la branche de commande (20), pouvant être commandée de telle sorte qu'en alternance, les cellules d'accumulation d'énergie (5-11) respectivement associées sont isolées par un premier élément de commutation (7) de l'unité de connexion (6) commandable associée et ce premier élément de commutation (7) ainsi que les cellules d'accumulation d'énergie (5) associées dans la branche de commande (20) sont court-circuités par un deuxième élément de commutation (7), ou la branche de commande (20) est interrompue, et
* toutes les autres unités de connexion de la branche de commande (20), lesquelles se trouvent entre le point de contact (11-1) et la phase (U) de la machine électrique (1) qui est reliée à la branche de commande (20), pouvant être commandées de telle sorte que les cellules d'accumulation d'énergie (5) respectivement associées sont isolées par un premier élément de commutation (7) de l'unité de connexion (6) commandable associée et ce premier élément de commutation (7) ainsi que les cellules d'accumulation d'énergie (5) associées dans la branche de commande (20) sont court-circuités par un deuxième élément de commutation (7).

2. Système selon la revendication 1, toutes les phases (U, V, W) de la machine électrique (1), respectivement par le biais d'au moins une diode de roue libre (9), pouvant être réliées au pôle négatif du dispositif de charge (10) et toutes les branches d'alimentation en énergie (3-1, 3-2, 3-3) possèdent respectivement un point de contact (11) qui est disposé entre deux modules d'accumulation d'énergie (4) et qui peut être relié au pôle positif du dispositif de charge (10) par le biais d'au moins une diode de roue libre (12) .

3. Système selon l'une des revendications 1 ou 2, une inductance de charge supplémentaire étant branchée entre le dispositif de charge (10) et la machine électrique (1) ou entre le dispositif de charge (10) et l'accumulateur d'énergie (2) commandable.

4. Procédé pour faire fonctionner un système de charge selon l'une des revendications 1 à 3, **caractérisé en ce que**
- au moins deux phases (U, V) de la machine électrique (1) à n phases, avec n ≥ 2, sont reliées, respectivement par le biais d'au moins une diode de roue libre (9-U, 9-V), au pôle négatif du dispositif de charge (10), la barre-bus de référence (T-) est également reliée au pôle négatif du dispositif de charge (10) et les points de contact (11-1, 11-2) sont reliés au pôle positif du dispositif de charge (10) par le biais d'au moins une diode de roue libre (12-1, 12-2),
- toutes les unités de connexion (6-31) qui sont associées aux cellules d'accumulation d'énergie (5-31) à charger sont commandées de telle sorte que la cellule d'accumulation d'énergie (5-31) respectivement associée sont commutées dans la branche d'alimentation en énergie (3-3),
- toutes les unités de connexion (6-32 à 6-3m) qui se trouvent dans la branche d'alimentation en énergie (3-3) de cellules d'accumulation d'énergie (5-31) à charger, mais qui ne sont elles-mêmes associées à aucune des cellules d'accumulation d'énergie (5-32 à 5-3m) à charger, sont commandées de telle sorte que les cellules d'accumulation d'énergie (5-32 à 5-3m) respectivement associées sont isolées par un premier élément de commutation (7) de l'unité de connexion (6) commandable associée et ce premier élément de commutation (7) ainsi que les cellules d'accumulation d'énergie (5) associées dans la branche d'alimentation en énergie (3-3) correspondante sont court-circuités par un deuxième élément de commutation (7),
- au moins une branche d'alimentation en énergie (3-1) avec point de contact (11-1) et sans cellule d'accumulation d'énergie (5) à charger sert de branche de commande (20),
* au moins une unité de connexion (6-11), laquelle se trouve dans la branche de commande (20) entre le point de contact (11-1) et la phase (U) de la machine électrique (1) qui est reliée à la branche de commande (20), pouvant être commandée de telle sorte qu'en alternance, les cellules d'accumulation d'énergie (5-11) respectivement associées sont isolées par un premier élément de commutation (7) de l'unité de connexion (6) commandable associée et ce premier élément de commutation (7) ainsi que les cellules d'accumulation d'énergie (5) associées dans la branche de commande (20) sont court-circuités par un deuxième élément de commutation (7), ou la branche de commande (20) est interrompue, et
* toutes les autres unités de connexion de la branche de commande (20), lesquelles se trouvent entre le point de contact (11-1) et la phase (U) de la machine électrique (1) qui est reliée à la branche de commande (20), pouvant être commandées de telle sorte que les cellules d'accumulation d'énergie (5) respectivement associées sont isolées par un premier élément de commutation (7) de l'unité de connexion (6) commandable associée et ce premier élément de commutation (7) ainsi que les cellules d'accumulation d'énergie (5) associées dans la branche de commande (20) sont court-circuités par un deuxième élément de commutation (7),
et
- toutes les autres unités de connexion (6) sont commandées de telle sorte que la branche d'alimentation en énergie (3-1, 3-2, 3-3) correspondante est interrompue.

5. Procédé selon la revendication 4, l'isolation en alternance de la cellule d'accumulation d'énergie (5) respectivement associée par un premier élément de commutation (7) de l'unité de connexion (6) commandable associée ainsi que le court-circuitage ce premier élément de commutation (7) ainsi que des cellules d'accumulation d'énergie (5) associées dans la branche de commande (20) par un deuxième élément de commutation (7), ou l'interruption de la branche de commande (20) étant obtenus par modulation d'impulsions en largeur d'un signal de commande de l'au moins une unité de connexion (6-11) qui se trouve dans une branche de commande entre le point de contact (11-1) et la phase (U) de la machine électrique (1) qui est reliée à la branche de commande (20).
